# EUROPÄISCHE PATENTSCHRIFT

(11) **EP 1 635 238 B1**
(45) Veröffentlichungstag und Bekanntmachung des Hinweises auf die Patenterteilung: **08.11.2006**
(21) Anmeldenummer: 05016480.5
(22) Anmeldetag: 29.07.2005
(51) Int. Cl.: G05D 7/06, F03G 7/06

(54) **Anordnung zum Verstellen eines Ventils**
Apparatus for operating a valve
Dispositif d'activation d'une valve

(30) Priorität: 18.08.2004 DE 102004039966
(43) Veröffentlichungstag der Anmeldung: 15.03.2006
(73) Patentinhaber: Möhlenhoff Wärmetechnik GmbH, 38229 Salzgitter (DE)
(72) Erfinder: Geburek, Frank, Dipl.-Ing., 31162 Bad Salzdethfurt (DE); Seelmann, Christian, 31174 Schellerten (DE); Drescher, Rainer, 31188 Holle (DE)
(74) Vertreter: Döring, Roger

(56) Entgegenhaltungen:
- EP-A- 0 280 891
- EP-A- 1 361 492
- US-A- 3 696 611

## Beschreibung

Die Erfindung bezieht sich auf eine Anordnung zum Verstellen eines Ventils, das einen unter der Wirkung einer Rückstellfeder stehenden Stößel aufweist, bei welcher in einem am Ventil anzubringenden Gehäuse ein temperaturabhängiger Dehnkörper mit einem Arbeitskolben angeordnet ist, bei welcher am Dehnkörper ein mit einer Spannungsquelle verbindbarer elektrischer Widerstand angebracht ist, der als flache Scheibe mit zumindest einer planen Stirnfläche ausgebildet und mit zwei elektrischen Anschlüssen ausgerüstet ist, und bei welcher in Montageposition des Gehäuses der Stößel des Ventils durch axiale Bewegung des Arbeitskolbens verstellbar ist (DE 102 20 682 A1).

Eine derartige Anordnung wird beispielsweise in der Heizungs- und Lüftungstechnik eingesetzt. Sie kann grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Durchflußmenge eines durch ein entsprechendes Rohrsystem strömenden bzw. fließenden Mediums verändert werden kann. Ein solches Medium ist beispielsweise Wasser oder Luft.

Bei der durch die DE 199 10 750 A1 bekannten Anordnung wird der Arbeitskolben eines Dehnkörpers und dadurch auch der Stößel eines Ventils durch die Wirkung von elektrischem Strom bewegt. Dazu ist an dem temperaturabhängigen Dehnkörper ein elektrischer Widerstand als Heizelement angebracht. Ein beispielsweise von einem Thermostat geliefertes Signal bewirkt, daß der Widerstand mit Strom versorgt wird. Durch die dann erzeugte Wärme wird der Arbeitskolben des Dehnkörpers verstellt. Der Stößel des in Ruhestellung beispielsweise geschlossenen Ventils wird dadurch entlastet und durch eine Rückstellfeder in Richtung "Öffnung des Ventils" bewegt. Um einen guten Wärmeübergang vom Widerstand zum Dehnstoffelement zu erreichen, können beide Teile durch Federkraft oder einen wärmeleitfähigen Kleber miteinander verbunden werden. Zwischen dem Widerstand und dem Dehnkörper vorhandene Teile können zu einer Verschlechterung des Wärmeübergangs zwischen beiden Teilen führen.

Bei der bekannten Anordnung nach der eingangs erwähnten DE 102 20 682 A1 ist zur Verbesserung des Wärmeübergangs zwischen dem elektrischen Widerstand und dem Dehnkörper eine flache, gut wärmeleitende Zwischenlage aus Isoliermaterial angebracht, an welcher in Montageposition sowohl der Widerstand als auch der Dehnkörper mit Druck anliegen. Die Zwischenlage wird bei dieser bekannten Anordnung in Montageposition sowohl an den Dehnkörper als auch an den Widerstand abgepreßt. Da sie gut wärmeleitend ist, wird die vom Widerstand gegebenenfalls erzeugte Wärme mit gleichbleibendem Wärmeübergang auf den Dehnkörper übertragen. Gleichzeitig trennt die Zwischenlage den Widerstand und den Dehnkörper potentialmäßig, da sie trotz guter Wärmeleitung insgesamt aus Isoliermaterial besteht. Auch hier können zwischen dem Widerstand und dem Dehnkörper vorhandene Teile sich jedoch ungünstig auf den Wärmeübergang auswirken.

Der Erfindung liegt die Aufgabe zugrunde, die eingangs geschilderte Anordnung so weiterzubilden, daß der Wärmeübergang zwischen Widerstand und Dehnkörper weiter stabilisiert wird.

Diese Aufgabe wird gemäß der Erfindung dadurch gelöst,
- daß die beiden elektrischen Anschlüsse unter Freilassung der planen Stirnfläche des Widerstandes an demselben angebracht sind und
- daß der Widerstand im Montagezustand mit seiner planen Stirnfläche galvanisch entkoppelt an einer ebenfalls planen Stirnfläche des Dehnkörpers anliegt.

Die elektrischen Anschlüsse des Widerstandes sind bei dieser Anordnung so positioniert, daß zumindest die plane Stirnfläche desselben frei bleibt und als solche genutzt werden kann. Der Widerstand kann dadurch ohne dazwischen liegende Teile so nahe wie möglich an den Dehnkörper herangebracht werden. Dabei ist aus Sicherheitsgründen eine galvanische Entkopplung beider Teile erforderlich. Das kann durch eine dünne Schicht aus Isoliermaterial erreicht werden, die zwischen Widerstand und Dehnkörper angeordnet wird. Diese Schicht kann auch - so wie es aus der DE 102 20 682 A 1 bekannt ist - als Zwischenlage aus gut wärmeleitendem Material ausgeführt sein.

Ein Ausführungsbeispiel des Erfindungsgegenstandes ist in den Zeichnungen dargestellt.

Es zeigen:
Fig. 1 in schematischer Darstellung eine an einem Ventil angebrachte Anordnung nach der Erfindung.
Fig. 2 einen Schnitt durch die Anordnung vor ihrer Festlegung an dem Ventil einschließlich Ventilkopf in vergrößerter Darstellung.
Fig. 3 einen in der Anordnung verwendbaren elektrischen Widerstand in weiter vergrößerter Darstellung.
Fig. 4 eine Draufsicht auf eine oben geöffnete Anordnung nach Fig. 2.

Die Erfindung wird im folgenden für den Einsatz in einer Warmwasserheizungsanlage beschrieben, ohne daß dadurch eine Beschränkung auf dieses Einsatzgebiet erfolgt.

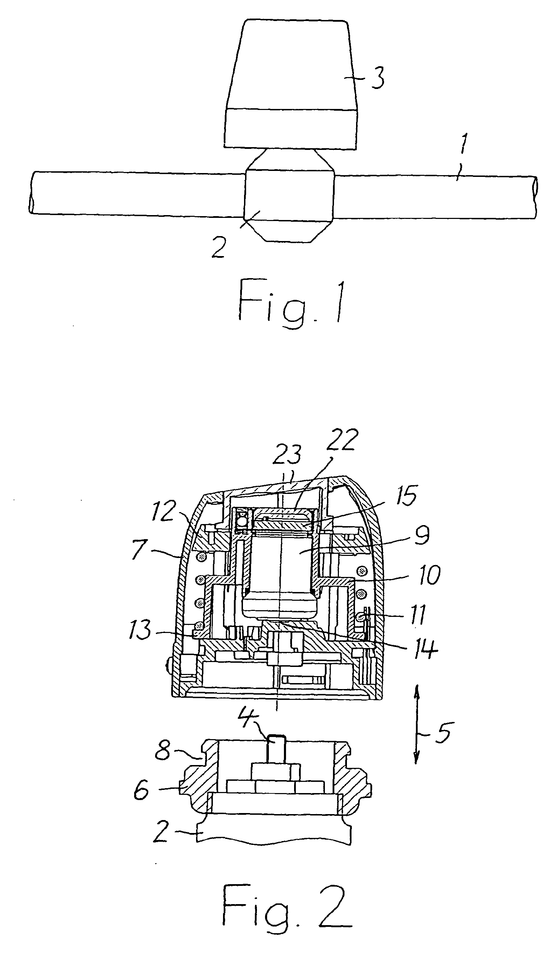

In Fig. 1 ist ein Abschnitt einer Rohrleitung 1 zur Führung von Heizungswasser dargestellt, in deren Verlauf ein Ventil 2 eingebaut ist. Die auf das Ventil 2 aufgesetzte Anordnung 3 zur Betätigung des Stößels desselben ist in Fig. 1 nur schematisch wiedergegeben. Der genauere Aufbau der Anordnung 3 und ihr Zusammenwirken mit dem Ventil 2 gehen aus Fig. 2 hervor.

Das Ventil 2 hat gemäß Fig. 2 einen Stößel 4, der unter der Wirkung einer der Einfachheit halber nicht mit dargestellten Rückstellfeder steht und in Richtung des Doppelpfeiles 5 verstellbar ist. Das Ventil 2 ist beispielsweise mit einem Gewinde ausgerüstet, auf welches ein Halter 6 aufgeschraubt werden kann. Der beispielsweise aus Kunststoff bestehende Halter 6 dient zur Festlegung eines Gehäuses 7 der Anordnung 3 am Ventil 2. Dazu können am Gehäuse 7 beispielsweise zwei federnd einrastende Haken angebracht sein, die in Montageposition in eine Ausnehmung 8 des Halters 6 eingreifen. Das Gehäuse 7 kann aber auch auf andere Art und Weise am Ventil 2 befestigt werden, beispielsweise mittels einer Überwurfmutter.

Die Anordnung 3 selbst besteht - ohne Gehäuse 7 und Halter 6 - aus einem temperaturabhängigen Dehnkörper 9, einem käfigartigen Halter 10 aus Isoliermaterial, einer Druckfeder 11 und einem Zwischenstück 12 aus Kunststoff. Die Druckfeder 11 liegt einerseits an einer Anlagefläche 13 des Käfigs 10 und andererseits am Zwischenstück 12 an. Sie ist über das Zwischenstück 12 am Gehäuse 7 abgestützt. Der Dehnkörper 9 hat einen Arbeitskolben 14. Am Dehnkörper 9 ist außerdem ein elektrischer Widerstand 15 angebracht, der über elektrische Leiter an eine Stromquelle anschließbar ist. Dehnkörper 9 und Widerstand 15 sind galvanisch entkoppelt, beispielsweise durch eine zwischen beiden Teilen liegende Schicht aus Isoliermaterial.

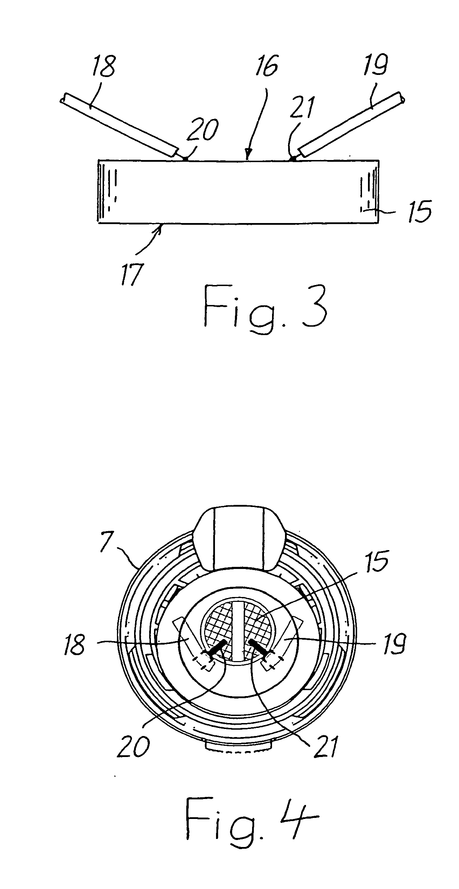

Der Dehnkörper 9 besteht in bevorzugter Ausführungsform aus einem hermetisch dichten metallischen Gehäuse, in dem ein sein Volumen temperaturabhängig ändernder Dehnstoff angeordnet ist. In diesen Dehnstoff ragt unter Beibehaltung des hermetisch dichten Verschlusses der Arbeitskolben 14 hinein. Der Dehnkörper 9 hat auf seiner dem Arbeitskolben 14 abgewandten Seite eine plane Stirnfläche, die als Anlagefläche für den Widerstand 15 dient. Der Widerstand 15 ist eine flache Scheibe mit zumindest einer planen Stirnfläche, so wie es in Fig. 2 angedeutet und in Fig. 3 genauer dargestellt ist. Er ist mit Vorteil als Widerstand mit positivem Temperaturkoeffizienten (PTC) ausgebildet. Solche, aus keramischem Material bestehenden Widerstände verhindern automatisch eine Überhitzung des Dehnkörpers 9, da sie beim Erreichen einer gegebenen hohen Temperatur abschalten.

Der Widerstand 15 ist - wie bereits erwähnt - eine flache Scheibe. Er kann entsprechend der Darstellung in Fig. 3 als zylindrische Scheibe mit zwei planen Stirnflächen 16 und 17 ausgeführt sein. Zumindest die zur Anlage am Dehnkörper 9 bestimmte Stirnfläche 17 ist als plane Stirnfläche ausgeführt. An den Widerstand 15 sind zwei isolierte elektrische Leiter 18 und 19 so angeschlossen, daß auf jeden Fall die plane Stirnfläche 17 frei von elektrischen Anschlüssen bleibt. Die elektrischen Anschlüsse 20 und 21 der Leiter 18 und 19 sind vorzugsweise an der Stirnfläche 16 des Widerstandes 15 positioniert, so wie es aus den Fig. 3 und 4 hervorgeht. Sie könnten auch zumindest teilweise an der Umfangsfläche des Widerstandes 15 liegen. Es ist damit sichergestellt, daß der Widerstand 15 ohne dazwischen liegende Teile innerhalb der Anordnung nach Fig. 2 so nah wie möglich am Dehnkörper 9 angebracht werden kann.

Zwischen Dehnkörper 9 und Widerstand 15 ist - wie schon erwähnt - zur galvanischen Entkopplung eine Schicht aus Isoliermaterial angebracht. Um dadurch den Wärmeübergang zwischen den beiden Teilen nicht zu verschlechtern, kann eine gut wärmeleitende Zwischenschicht verwendet werden. Deren Isoliermaterial ist beispielsweise mit aus Aluminiumoxid bestehenden Partikeln gefüllt. Der Widerstand 15 kann in Montageposition von einer Kappe 22 aus Isoliermaterial gegen eine solche Zwischenschicht gedrückt werden, die dadurch ihrerseits gegen die plane Stirnfläche des Dehnkörpers 9 gedrückt wird. Die Kappe 22 besteht mit Vorteil aus einem temperaturbeständigen Isoliermaterial, das seine Elastizität bei Temperaturen von 120 °C und höher beibehält. Ein geeignetes Material ist beispielsweise Polyphenylensulfid (PPS).

Der Widerstand 15, die Zwischenschicht aus wärmeleitendem Isoliermaterial und die Kappe 22 sind im dargestellten Ausführungsbeispiel in einer Erweiterung des Halters 10 angeordnet. Der in dieser Erweiterung freibleibende Raum ist vorzugsweise mit feuchtigkeitsdichtem Material vollständig ausgefüllt, so daß der Widerstand 15, seine Anschlüsse 20 und 21 sowie die isolierten Leiter 18 und 19 hermetisch abgedichtet sind. Als feuchtigkeitsdichtes Material wird mit Vorteil eine Vergußmasse verwendet, die bis 140 °C temperaturbeständig und nicht brennbar ist. Eine solche Vergußmasse ist beispielsweise eine auf dem Markt erhältliche Elektronikvergußmasse. Es kann dadurch keine Feuchtigkeit an die erwähnten Teile der Anordnung gelangen. Die Anordnung ist damit außerdem spannungsfest und vor Blitzeinschlag geschützt. Über der Erweiterung des Halters 10 bzw. der Kappe 22 kann gemäß Fig. 2 eine Hubanzeige 23 angebracht sein, die in Abhängigkeit von der Position des Arbeitskolbens 14 mehr oder weniger weit aus dem Gehäuse 7 herausragt.

## Patentansprüche

1. Anordnung (3) zum Verstellen eines Ventils (2), das einen unter der Wirkung einer Rückstellfeder stehenden Stößel (4) aufweist, bei welcher in einem am Ventil (2) anzubringenden Gehäuse (7) ein temperaturabhängiger Dehnkörper (9) mit einem Arbeitskolben (14) angeordnet ist, bei welcher am Dehnkörper (9) ein mit einer Spannungsquelle verbindbarer elektrischer Widerstand (15) angebracht ist, der als flache Scheibe mit zumindest einer planen Stirnfläche (17) ausgebildet und mit zwei elektrischen Anschlüssen (20, 21) ausgerüstet ist, und bei welcher in Montageposition des Gehäuses (7) der Stößel (4) des Ventils (2) durch axiale Bewegung des Arbeitskolbens (14) verstellbar ist, **dadurch gekennzeichnet,**
- **daß** die beiden elektrischen Anschlüsse (20,21) unter Freilassung der planen Stirnfläche (17) des Widerstands (15) an demselben angebracht sind und
- **daß** der Widerstand (15) im Montagezustand mit seiner planen Stirnfläche (17) galvanisch entkoppelt an einer ebenfalls planen Stirnfläche des Dehnkörpers (9) anliegt.

2. Anordnung nach Anspruch 1, **dadurch gekennzeichnet, daß** die elektrischen Anschlüsse (20,21) auf der der planen Stirnfläche (17) abgewandten Seite des Widerstandes (15) angebracht sind.

3. Anordnung nach Anspruch 1 oder 2, **dadurch gekennzeichnet, daß** zwischen dem Widerstand (15) und dem Dehnkörper (9) eine flache, gut wärmeleitende Zwischenlage aus Isoliermaterial angebracht ist.

4. Anordnung nach Anspruch 3, **dadurch gekennzeichnet, daß** in Montageposition sowohl der Widerstand (15) als auch der Dehnkörper (9) mit Druck an der Zwischenlage anliegen.

## Claims

1. Arrangement (3) for adjusting a valve (2) which has a plunger (4) which is subject to the action of a return spring, in which arrangement (3) a temperature-dependent expanding body (9) having a working piston (14) is arranged in a housing (7) which is to be attached to the valve (2), in which arrangement (3) an electrical resistor (15), which can be connected to a voltage source, is attached to the expanding body (9), said electrical resistor (15) being embodied as a flat plate with at least one planar end face (17) and being equipped with two electrical terminals (20, 21), and in which arrangement (3), in the assembled position of the housing (7), the plunger (4) of the valve (2) can be adjusted by the axial movement of the working piston (14), **characterized**
- **in that** the two electrical terminals (20, 21) are attached to the resistor (15) such that the planar end face (17) of the latter is left free, and
- **in that**, in the assembled state, the planar end face (17) of the resistor (15) bears against a likewise planar end face of the expanding body (9) in a galvanically decoupled manner.

2. Arrangement according to Claim 1, **characterized in that** the electrical terminals (20, 21) are attached to that side of the resistor (15) which faces away from the planar end face (17).

3. Arrangement according to Claim 1 or 2, **characterized in that** a flat, highly thermally conductive intermediate layer made from an insulating material is applied between the resistor (15) and the expanding body (9).

4. Arrangement according to Claim 3, **characterized in that**, in the assembled position, both the resistor (15) and the expanding body (9) bear against the intermediate layer under pressure.

## Revendications

1. Agencement (3) pour l'ajustement d'une vanne (2) qui comporte un poussoir (4) soumis à l'effet d'un ressort de rappel, avec un corps extensible (9) sensible à la chaleur qui est placé dans un boîtier (7) à fixer sur la vanne (2) et agencé avec un piston moteur (14), avec une résistance électrique (15) placée sur le corps extensible (9) de façon à pouvoir être reliée avec une source de tension, qui est formée comme un disque plat avec au moins une surface de contact plane (17) et avec deux raccords électriques (20, 21), et le poussoir (4) de la vanne (2) pouvant être ajusté par un déplacement axial du piston moteur (14) lorsque le boîtier (7) est en position de montage, **caractérisé en ce que**
- les deux raccords électriques (20, 21) sous libération de la surface de contact plane (17) de la résistance (15) sont fixés sur cette même résistance (15) et
- la résistance (15) repose à l'état de montage avec sa surface de contact plane (17) de façon galvanique en découplage contre une autre surface de contact plane du corps extensible (9).

2. Agencement selon la revendication 1, **caractérisé en ce que** les raccords électriques (20, 21) se situent du côté de la résistance (15) qui est opposé à la surface de contact plane (17).

3. Agencement selon la revendication 1 ou 2, **caractérisé par** une couche intermédiaire, plate et très conductrice de chaleur, faite d'un matériau isolant, qui est disposée entre la résistance (15) et le corps extensible (9).

4. Agencement selon la revendication 3, **caractérisé en ce que**, dans la position de montage, aussi bien la résistance (15) que le corps extensible (9) sont pressés contre la couche intermédiaire.
